# EUROPEAN PATENT APPLICATION

(11) **EP 2 466 425 A1**
(43) Date of publication of application: **20.06.2012**
(21) Application number: 11809270.9
(22) Date of filing: 20.07.2011
(51) Int. Cl.: G06F 3/037

(54) **TERMINAL TRACE BALL NAVIGATION DEVICE AND NAVIGATION METHOD**

(30) Priority: 20.07.2010 CN 201010231439
(71) Applicant: Huawei Device Co., Ltd., Shenzhen, Guangdong 518129 (CN)
(72) Inventor: HOU, Jingbo, Shenzhen Guangdong 518129 (CN); ZHU, Tong, Shenzhen Guangdong 518129 (CN)
(74) Representative: Thun, Clemens
(86) International application number: PCT/CN2011/077339
(87) International publication number: WO 2012/010082

(57) **Abstract**

The present invention relates to a mobile terminal, and discloses a terminal trackball navigation apparatus and a navigation method to prevent mobile phone communication from interfering with the mobile phone navigation apparatus based magnetic induction. The method includes: receiving electrical pulse signals sent by a light-receiving counter; recognizing a displacement direction of a trackball according to a position of a light-receiving counter that sends the electrical pulse signals; recognizing a rotation speed and a rotation distance of the raster wheel according to a duration and a period of the electrical pulse signals; and calculating a displacement speed and a distance of the trackball according to the rotation speed and the rotation distance of the raster wheel, and enabling a navigation chip to generate navigation information. The technical solutions of the present invention are applicable to various mobile terminals.

## Description

This application claims priority to Chinese Patent Application No. 201010231439.7, filed with the Chinese Patent Office on July 20, 2010 and entitled "TERMINAL TRACKBALL NAVIGATION APPARATUS AND NAVIGATION METHOD", which is incorporated herein by reference in its entirety.

### FIELD OF THE INVENTION

The present invention relates to a mobile terminal, and in particular, to a terminal trackball navigation apparatus and a navigation method.

### BACKGROUND OF THE INVENTION

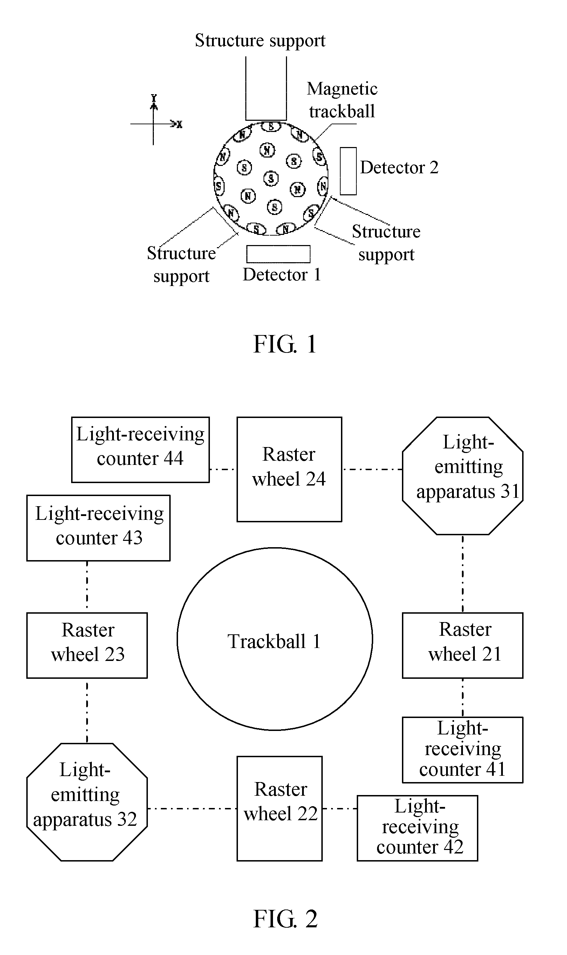

With development of mobile phone technologies, some smart phones provide trackball based on magnetic induction to implement navigation, which enhances the user experience of the navigation apparatus on the mobile phone. FIG 1 shows a structure of a mobile phone navigation apparatus based on magnetic induction. A trackball is a small magnetic round ball which has multiple N poles and S poles. The N poles are opposite to the S poles. A magnetic inductor is configured in each of two adjacent directions, for example, detector 1 and detector 2 in FIG 1. When a user of the mobile phone flips the trackball, the magnetic pole at each point of the trackball changes with motion of the trackball, and the magnetic field distribution around the trackball changes accordingly. After the detectors induce the change, and convert the change of the magnetic force into electrical signals and output the signals to a Central Processing Unit (CPU). The CPU recognizes the motion direction of the trackball according to the electrical signals transmitted by the two detectors, and controls the navigation.

The inventor finds at least the following problems in the prior art: Because the mobile phone itself implements communication through radio signals, the communication process generates electromagnetic signals, which interfere with the magnetic force detection of the navigation apparatus and lead to misoperation; especially when the transmit power of the mobile phone is great, the magnetic field interference is even greater.

### SUMMARY OF THE INVENTION

The embodiments of the present invention provide a terminal trackball navigation apparatus and a navigation method to prevent mobile phone communication from interfering with the terminal trackball navigation apparatus.

To fulfill such objectives, the following technical solutions are put forward:
A terminal trackball navigation apparatus includes:
   a trackball that can roll;
   four raster wheels, distributed around the trackball, axes of all the raster wheels are on the same horizontal plane; each raster wheel points to a center of the trackball along a radial direction; an angle between adjacent raster wheels in the horizontal plane is 90 degrees; a gap exists between each raster wheel and the trackball when the trackball is free; and light-transmitting regions alternate with light-tight regions along a circumferential direction on an axial plane of each raster wheel;
   two light-emitting apparatuses, characterized by: one light-emitting apparatus is set between two adjacent raster wheels, and the other light-emitting apparatus is set between the other two adjacent raster wheels; light emitted by the light-emitting apparatuses can cast on preset positions on the axial planes of the raster wheels, and the preset position is on a rotary track shared by the light-transmitting region and the light-tight region of the raster wheel;
   four light-receiving counters, each distributed on the other side of a light-emitting apparatus against a raster wheel along an axis of the raster wheel, and a light-receiving counter is unable to receive light emitted by a light-emitting apparatus when a light-tight region of a raster wheel turn to preset positions, and is able to receive the light emitted by the light-emitting apparatus when a light-transmitting region of the raster wheel turn to the preset positions; and
   a navigation chip, electrically connected to all the light-receiving counters.

When the trackball rolls, the trackball touches at least one raster wheel, the raster wheel that touches the trackball rotates with the roll of the trackball, one of the light-emitting apparatuses casts light onto the axial plane of the rotating raster wheel; one of the light-receiving counters receives the light emitted by the light-emitting apparatus through the rotating raster wheel, and converts the light into electrical pulse signals and sends the signals to the navigation chip; the navigation chip recognizes the displacement direction of the trackball according to the position of the light-receiving counter that sends the electrical pulse signals; and the navigation chip recognizes the rotation speed and the rotation distance of the raster wheel according to the duration and the period of the electrical pulse signals, and calculates out the displacement speed and the distance of the trackball according to the rotation speed and the rotation distance of the raster wheel.

A navigation method of a terminal trackball navigation apparatus includes:
receiving light that penetrates a rotating raster wheel when a rolling trackball touches at least one raster wheel and impels the raster wheel to rotate; and
converting the light into electrical pulse signals, and sending the electrical pulse signals to a navigation chip so that the navigation chip can recognize a displacement direction, a speed and a distance of the trackball according to a position of the light-receiving counter that sends the electrical pulse signals as well as a duration and a period of the electrical pulse signals, and can generate navigation information.

A navigation method of a terminal trackball navigation apparatus includes:
receiving electrical pulse signals sent by a light-receiving counter;
recognizing a displacement direction of a trackball according to a position of a light-receiving counter that sends the electrical pulse signals;
recognizing a rotation speed and a rotation distance of the raster wheel according to a duration and a period of the electrical pulse signals; and
calculating a displacement speed and a distance of the trackball according to the rotation speed and the rotation distance of the raster wheel.

In the terminal trackball navigation apparatus and navigation method provided in the embodiments of the present invention, the displacement of the trackball in the navigation apparatus is located according to the optical signals, which prevents mobile phone communication from interfering with the terminal trackball navigation apparatus.

### BRIEF DESCRIPTION OF THE DRAWINGS

FIG 1 is a schematic structure diagram of a mobile phone navigation apparatus based on magnetic induction in the prior art;
FIG 2 is a schematic structure diagram of a terminal trackball navigation apparatus according to an embodiment of the present invention;
FIG 3a is a schematic structure diagram of an axial plane of a raster wheel according to an embodiment of the present invention;
FIG 3b is a schematic diagram of a relative position between a raster wheel 24 shown in FIG 2 and a light-receiving counter 44;
FIG 4 is a flow chart of a terminal trackball navigation method according to an embodiment of the present invention; and
FIG 5 is a flow chart of a terminal trackball navigation method according to another embodiment of the present invention.

### DETAILED DESCRIPTION OF THE EMBODIMENTS

The apparatus and the method provided in the embodiments of the present invention are detailed below with reference to the accompanying drawings.

As shown in FIG 2, a terminal trackball navigation apparatus according to an embodiment of the present invention includes: A trackball 1 that can roll. The trackball 1 may be an ordinary mechanical ball but needs to have rigidity and surface friction force to some extent.

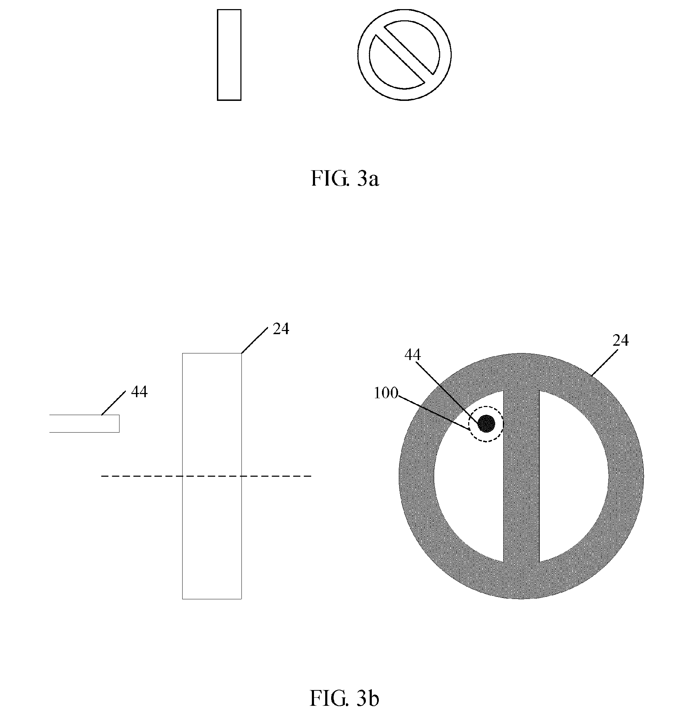

Four raster wheels 21, 22, 23, and 24, which are distributed around the trackball 1. The dotted line in FIG 2 shows an axis of each raster wheel. An axle of each raster wheel is fixed, and light-transmitting regions alternate with light-tight regions on a circumference of an axial plane, and each raster wheel can rotate round the axis. A structure of a raster wheel is diversified. FIG 3a shows a structure of a raster wheel. In FIG 3a, the view on the left is a radial view of the raster wheel, and the view on the right is an axial plane view of the raster wheel. In the axial plane view of this raster wheel, two semicircle regions are light-transmitting regions, and other regions are light-tight regions. The axes of the raster wheels 21, 22, 23, and 24 are on the same horizontal plane; each raster wheel points to the ball center along the radial direction; the angle between adjacent raster wheels in the horizontal plane is 90 degrees; a gap exists between each raster wheel and the trackball 1 when the trackball 1 is free so that the trackball 1 can move on the horizontal plane in the central region restricted by the raster wheels.

Two light-emitting apparatuses 31 and 32, in which, the light-emitting apparatus 31 is set between the raster wheel 21 and the raster wheel 24, and the light-emitting apparatus 32 is set between the raster wheel 22 and the raster wheel 23. Preferably, one light-emitting apparatus is set on the angular bisector of two adjacent raster wheels, and the other light-emitting apparatus is set on the angular bisector of the other two adjacent raster wheels. In this way, the light can cast on all the raster wheels evenly, and the displacement of the trackball 1 can be recognized more accurately. In this embodiment, the light-emitting apparatus 31 is set on the angular bisector of the raster wheel 21 and the raster wheel 24, and the light-emitting apparatus 32 is set on the angular bisector of the raster wheel 22 and the raster wheel 23. Alternatively, the light-emitting apparatus 31 may be set on the angular bisector of the raster wheel 21 and the raster wheel 22, and the light-emitting apparatus 32 may be set on the angular bisector of the raster wheel 23 and the raster wheel 24; the principle of this setting is the same and therefore is not described in detail again. Preferably, the light-emitting apparatus is a keypad backlight of a mobile phone or Light-Emitting Diode (LED). The backlight eliminates the need of an additional light-emitting apparatus, which reduces costs, and the LED saves energy due to low energy consumption. However, the light-emitting apparatuses are not limited to such materials. Any light-emitting materials suitable in a mobile phone can be used as a light-emitting apparatus. For example, if an infrared light-emitting tube is used instead, the light-receiving counter is an infrared receiving tube. The light emitted by the light-emitting apparatuses 31 and 32 can cast onto preset positions of the axial planes of the raster wheels 21, 22, 23, and 24. The angles of the preset positions are fixed, and are on a rotation track shared by the light-transmitting regions and light-tight regions of each raster wheel. Both the light-transmitting regions and the light-tight regions of each raster wheel can rotate to the preset positions.

With regard to the four light-receiving counters 41, 42, 43, and 44. Each light-receiving counter is set on the other side of a light-emitting apparatus against a raster wheel along the axis of the raster wheel, and is configured to receive the light that penetrates the raster wheel from the light-emitting apparatus, and convert the light into electrical pulse signals. Specifically, when the light-tight regions of the raster wheel 21 turn to the preset position, the light-receiving counter 41 is completely blocked by the light-tight regions of the raster wheel 21 and is unable to receive the light emitted by the light-emitting apparatus 31; when the light-tight regions of the raster wheel 21 leave the preset position, the light-receiving counter 41 can receive the light that penetrates the light-transmitting regions of the raster wheel 21. Accordingly, when the light-tight regions of the raster wheel 22 turn to the preset position, the light-receiving counter 42 is completely blocked by the light-tight regions of the raster wheel 22 and is unable to receive the light emitted by the light-emitting apparatus 32; when the light-tight regions of the raster wheel 22 leave the preset position, the light-receiving counter 42 can receive the light that penetrates the light-transmitting regions of the raster wheel 22. When the light-tight regions of the raster wheel 23 turn to the preset position, the light-receiving counter 43 is completely blocked by the light-tight regions of the raster wheel 23 and is unable to receive the light emitted by the light-emitting apparatus 32; when the light-tight regions of the raster wheel 23 leave the preset position, the light-receiving counter 43 can receive the light that penetrates the light-transmitting regions of the raster wheel 23. When the light-tight regions of the raster wheel 24 turn to the preset position, the light-receiving counter 44 is completely blocked by the light-tight regions of the raster wheel 24 and is unable to receive the light emitted by the light-emitting apparatus 31; when the light-tight regions of the raster wheel 24 leave the preset position, the light-receiving counter 44 can receive the light that penetrates the light-transmitting regions of the raster wheel 24. Take the light-transmitting apparatus 31, the raster wheel 24, and the light-receiving counter 44 which make up a suite of light transmitting and receiving apparatuses as an example. As shown in FIG 3b, the view on the leftis a top view of layout of the raster wheel 24 relative to the light-receiving counter 44; and the view on the right is a right view of layout of the raster wheel 24 relative to the light-receiving counter 44. It is assumed that the light from the light-emitting apparatus 31 casts onto a preset position 100 of the raster wheel 24 from the right side. When the light-tight regions of the raster wheel 24 turn to the preset position 100, the light-receiving counter 44 is completely blocked by the light-tight regions of the raster wheel 24, and is unable to receive the light from the light-emitting apparatus 31; when the light-transmitting regions of the raster wheel 24 turn to the preset position 100, the light-receiving counter 44 receives the light that penetrates the light-transmitting regions of the raster wheel 24.

A navigation chip, in which, the navigation chip is electrically connected to the light-receiving counters, and receives the electrical pulse signals of the light-receiving counters. The navigation chip recognizes a displacement direction, a speed and a distance of the trackball according to a position of the light-receiving counter that sends the electrical pulse signals as well as a duration and a period of the electrical pulse signals.

The terminal trackball navigation apparatus works in this way: A mobile phone user rolls the trackball 1 to a direction such as rightward direction, and the trackball 1 touches the raster wheel 21; afterward, the user goes on rolling the trackball rightward, and the trackball 1 impels the raster wheel 21 to travel a circle within two seconds. The light-emitting apparatus 31 illuminates the axial plane of the rotating raster wheel 21. The raster wheel 21 is partially light-transmitting. When the raster wheel 21 rotates, the light-receiving counter 41 does not receive the light that penetrates the raster wheel 21 from the light-emitting apparatus 31 until the light-transmitting regions of the raster wheel 21 turn to the preset position. If an axial plane structure of the raster wheel 21 is the structure shown in FIG 3, the light-receiving counter 41 receives the light that penetrates the semicircle light-transmitting regions of the raster wheel 21 from the light-transmitting apparatus 31 twice within two seconds, and recognizes that the raster wheel 21 has travelled one circle within two seconds. Therefore, the light-receiving counter 41 generates electrical pulse signals and sends the signals to the navigation chip 5, where the duration and the period of the electrical pulse signals correspond to the one-circle rotation of the raster wheel 21 within two seconds. The navigation chip knows that the trackball moves rightward because the electrical pulse signals are sent by the light-receiving counter 41, and knows that the raster wheel 21 travels one circle within two seconds according to the duration and the period of the electrical pulse signals, and determines the rightward displacement speed and distance of the trackball.

In the terminal trackball navigation apparatus provided in the embodiments of the present invention, the displacement of the trackball in the navigation apparatus is located according to the optical signals, which prevents mobile phone communication from interfering with the terminal trackball navigation apparatus. The trackball requires no special materials, and is more cost-efficient than the existing magnetic trackball.

The terminal trackball navigation apparatus in this embodiment is applicable to various mobile phones and handheld terminals, and also to the computer mouse.

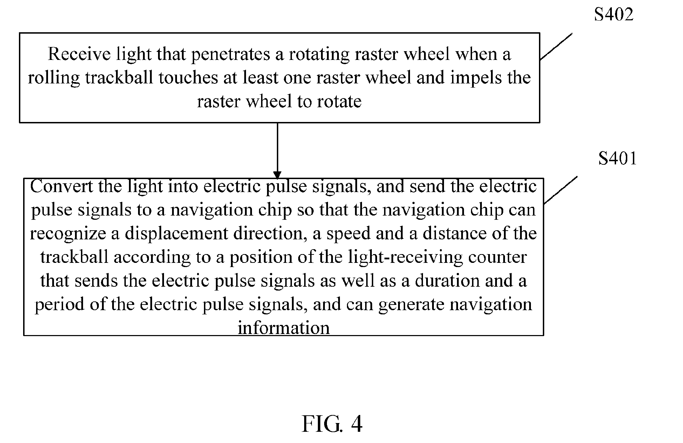

A terminal trackball navigation method is provided in an embodiment of the present invention and is applied to the light-receiving counter in the terminal trackball navigation apparatus shown in FIG 2. As shown in FIG 4, the method includes the following steps:
S401. Receive light that penetrates a rotating raster wheel when a rolling trackball touches at least one raster wheel and impels the raster wheel to rotate.
S402. Convert the light into electrical pulse signals, and send the electrical pulse signals to a navigation chip so that the navigation chip can recognize a displacement direction, a speed and a distance of the trackball according to a position of the light-receiving counter that sends the electrical pulse signals as well as a duration and a period of the electrical pulse signals, and can generate navigation information.

The navigation information is designed to display cursor motion or image motion representing trackball motion on the display screen of the terminal.

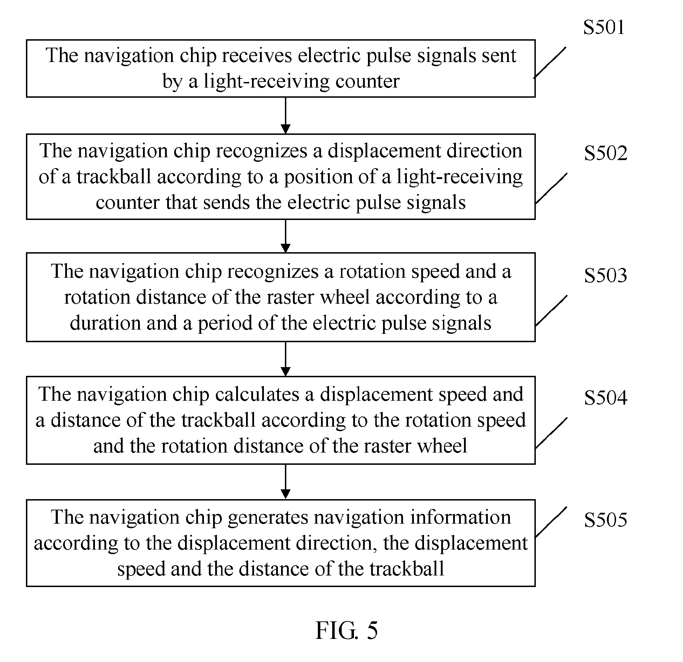

Another terminal trackball navigation method is provided in an embodiment of the present invention and is applied to the navigation chip in the terminal trackball navigation apparatus shown in FIG 2. As shown in FIG 5, the method includes the following steps:
S501. The navigation chip receives electrical pulse signals sent by a light-receiving counter.
S502. The navigation chip recognizes a displacement direction of a trackball according to a position of a light-receiving counter that sends the electrical pulse signals.
S503. The navigation chip recognizes a rotation speed and a rotation distance of the raster wheel according to a duration and a period of the electrical pulse signals.
S504. The navigation chip calculates a displacement speed and a distance of the trackball according to the rotation speed and the rotation distance of the raster wheel.
S505. The navigation chip generates navigation information according to the displacement direction, the displacement speed and the distance of the trackball.

The navigation information is designed to display cursor motion or image motion representing trackball motion on the display screen of the terminal.

S502 and S503-S504 are not order-sensitive.

In the terminal trackball navigation method provided in this embodiment, the displacement of the trackball in the navigation apparatus is located according to the optical signals, which prevents mobile phone communication from interfering with the terminal trackball navigation apparatus. The trackball requires no special materials, and is more cost-efficient than the existing magnetic trackball.

Persons of ordinary skill in the art should understand that all or part of the steps of the method provided in the embodiments above may be implemented by a program instructing relevant hardware. The program may be stored in computer readable storage media. When the program runs, the program executes the steps of the method specified in any embodiment above. The storage medium may be magnetic disk, Compact Disk Read-Only Memory (CD-ROM), Read-Only Memory (ROM) or Random Access Memory (RAM).

The above descriptions are merely exemplary embodiments of the present invention, but not intended to limit the scope of the present invention. Any modifications, variations or replacement that can be easily derived by those skilled in the art should fall within the protection scope of the present invention. For example, the outer shape of a raster wheel may be a circle or a regular polygon, and the axial plane structure of the raster wheel alternates the light-transmitting regions with the light-tight regions regardless of the shapes of the light-transmitting regions and light-tight regions. Therefore, the protection scope of the present invention is subject to the appended claims.

## Claims

1. A terminal trackball navigation apparatus, comprising:
a trackball that can roll;
four raster wheels, distributed around the trackball, axes of all the raster wheels are on the same horizontal plane, each raster wheel points to a center of the trackball along a radial direction, an angle between adjacent raster wheels in the horizontal plane is 90 degrees, a gap exists between each raster wheel and the trackball when the trackball is free, and light-transmitting regions alternate with light-tight regions along a circumferential direction on an axial plane of each raster wheel;
two light-emitting apparatuses, **characterized by**: one light-emitting apparatus is set between two adjacent raster wheels, and the other light-emitting apparatus is set between the other two adjacent raster wheels, light emitted by the light-emitting apparatuses can cast onto preset positions on the axial planes of the raster wheels, and the preset position is on a rotary track shared by light-transmitting regions and light-tight regions of the raster wheel;
four light-receiving counters, each distributed on the other side of a light-emitting apparatus against a raster wheel along an axis of the raster wheel, a light-receiving counter is unable to receive light emitted by a light-emitting apparatus when the light-tight regions of the raster wheel turn to the preset position, and is able to receive the light emitted by the light-emitting apparatus when the light-transmitting regions of the raster wheel turn to the preset position; and
a navigation chip, electrically connected to all the light-receiving counters, wherein:
when the trackball rolls, the trackball touches at least one raster wheel, the raster wheel that touches the trackball rotates with the roll of the trackball, the light-emitting apparatuses cast light onto an axial plane of the rotating raster wheel; at least one of the light-receiving counters receives the light emitted by the one of the light-emitting apparatuses through the rotating raster wheel, and converts the light into electrical pulse signals and sends the signals to the navigation chip; the navigation chip recognizes a displacement direction of the trackball according to a position of the light-receiving counter that sends the electrical pulse signals; and the navigation chip calculates out a displacement speed and a distance of the trackball according to a duration and a period of the electrical pulse signals and generates navigation information.

2. The terminal trackball navigation apparatus according to claim 1, wherein:
the light-emitting apparatuses are infrared light-emitting tubes, and the light-receiving counters are infrared receiving tubes.

3. The terminal trackball navigation apparatus according to claim 1, wherein:
the light-emitting apparatuses are mobile phone keypad backlights or Light-Emitting Diodes (LEDs).

4. The terminal trackball navigation apparatus according to claim 1, wherein:
one light-emitting apparatus is set on an angular bisector of two adjacent raster wheels, and the other light-emitting apparatus is set on an angular bisector of the other two adjacent raster wheels.

5. A terminal trackball navigation method, comprising:
receiving light that penetrates a rotating raster wheel when a rolling trackball touches at least one raster wheel and impels the raster wheel to rotate; and
converting the light into electrical pulse signals, and sending the electrical pulse signals to a navigation chip so that the navigation chip can recognize a displacement direction, a speed and a distance of the trackball according to a position of the light-receiving counter that sends the electrical pulse signals as well as a duration and a period of the electrical pulse signals, and can generate navigation information.

6. A terminal trackball navigation method, comprising:
receiving electrical pulse signals sent by a light-receiving counter;
recognizing a displacement direction of a trackball according to a position of a light-receiving counter that sends the electrical pulse signals;
recognizing a rotation speed and a rotation distance of the raster wheel according to a duration and a period of the electrical pulse signals; and
calculating a displacement speed and a distance of the trackball according to the rotation speed and the rotation distance of the raster wheel.
